(19)

Europäisches
Patentamt
European
Patent Office
Office européen
des brevets

(11) **EP 3 048 744 A1**

(12) **EUROPEAN PATENT APPLICATION**

(43) Date of publication:
**27.07.2016 Bulletin 2016/30**

(21) Application number: **15152524.3**

(22) Date of filing: **26.01.2015**

(51) Int Cl.:
*H04B 7/04* (2006.01)     *H04B 7/06* (2006.01)
*H04B 7/10* (2006.01)     *H04J 11/00* (2006.01)
*H04L 27/26* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Ben Rached, Nidham
91620 NOZAY (FR)**
• **Krief, Patrick-Albert
91620 NOZAY (FR)**

(74) Representative: **Cabinet Camus Lebkiri
25, Rue de Maubeuge
75009 Paris (FR)**

(54) **Method for transmitting synchronization signals in telecommunication**

(57)     A method for transmitting at least one encoded radio signal on a plurality of antennas, each encoded radio signal being encoded by a predefined sequence comprising a set of symbol, characterized in that it comprises:
- Defining a precoding vector switching scheme (PVS), the said scheme comprising a set of precoding vectors, the dimension of each precoding vector of the said scheme (PVS) being equal to the number of antennas;
- A precoding step for each signal comprising:
o Selecting a precoding vector of the said scheme (SEL);
o Applying a pattern (APP) to each symbol of a signal, the pattern being the first component of the precoding vector of the said scheme;
o Repeating applying pattern (REP) to generate a precoded signal;
o Transmitting simultaneously the precoded signal on each antenna (TRANS);

- Repeating periodically the precoding step by switching of precoding vector of the said scheme (PVS).

FIG. 1

## Description

## TECHNICAL FIELD

The present subject matter relates generally to wireless communication systems, and particularly to methods and systems for the transmission of synchronization signals.

## BACKGROUND

In cellular communication systems, as Long Term Evolution (LTE), a base station, as, an evolved Node B (eNB) transmits synchronization signals. Those signals are used by user equipments (UE) for synchronizing to the base station signal, and then determining the identity of the cell.

Currently, as specified in the 3GPP LTE, the base station transmits the synchronization signals on one port of antenna of the base station. To enhance the cell detection by the UE, the base station can transmit each synchronization signal on each port of antennas, in case of a base station with 2 or 4 ports of antennas, to use transmit diversity for improving the signal to noise ratio in order to compensate for signal degradation such as noise, distortion, attenuation, interference, etc...

We already know the Cyclic Delay Diversity (CDD), wherein delayed replicas of the same signal are transmitted from different antennas of the base station to achieve diversity.

This diversity scheme brings disadvantage: it is a complex solution to implement. Furthermore, the gain compared to one antenna transmission is weak in low channel correlation, and with cross polarized antennas.

## SUMMARY

It is an object of the subject matter to provide methods and systems for increasing detection of synchronization signals by improving the signal to noise ratio in order to enhance the cell detection by UEs.

To this end, there is provided a method for transmitting at least one encoded radio signal on a plurality of antennas, each encoded radio signal being encoded by a predefined sequence comprising a set of symbol, characterized in that it comprises:

- Defining a precoding vector switching scheme (PVS), the said scheme comprising a set of precoding vectors, the dimension of each precoding vector of the said scheme (PVS) being equal to the number of antennas;
- A precoding step for each signal comprising:

     o Selecting a precoding vector of the said scheme (SEL);
     o Applying a pattern (APP) to each symbol of a signal, the pattern being the first component of the precoding vector of the said scheme;
     o Repeating applying pattern (REP) for each pattern of the precoding vector above to generate a precoded signal;
     o Transmitting simultaneously the precoded signal on each antenna (TRANS);

- Repeating periodically the precoding step by switching of precoding vector of the said scheme (PVS).

According to not limited embodiments, the method can comprise one or more of the following additional characteristics:

- The encoded radio signal is at least one synchronization signals.
- The synchronization signals comprises:

     o A signal to provide time synchronization;
     o A signal to provide frequency synchronization.

- The frequency synchronization signal is the Primary Synchronization Signal (PSS);
- The time synchronization signal is the Secondary Synchronization Signal (SSS).
- The operation of applying a pattern comprises the operation of modifying the phase of each symbol of sequences with the said component of a precoding vector.
- The plurality of antennas comprises 2 antennas.
- The plurality of antennas comprises 4 antennas;
- The precoding vector scheme (PVS) comprises at least 4 vectors:

     ○ a vector $V1$ $\left(\frac{1}{\sqrt{2}} \quad \frac{1}{\sqrt{2}}\right)$;

     ○ a vector $V2$ $\left(\frac{1}{\sqrt{2}} \quad \frac{j}{\sqrt{2}}\right)$;

     ○ a vector $V3$ $\left(\frac{1}{\sqrt{2}} \quad -\frac{1}{\sqrt{2}}\right)$;

     ○ a vector $V4$ $\left(\frac{1}{\sqrt{2}} \quad -\frac{j}{\sqrt{2}}\right)$.

- The precoding vector scheme (PVS) comprises at least 4 vectors:

     ○ a vector $V1$ $\left(\frac{1}{\sqrt{2}} \quad \frac{1}{\sqrt{2}} \quad \frac{1}{\sqrt{2}} \quad \frac{1}{\sqrt{2}}\right)$;

     ○ a vector $V2$ $\left(\frac{1}{\sqrt{2}} \quad \frac{j}{\sqrt{2}} \quad \frac{-1}{\sqrt{2}} \quad \frac{-j}{\sqrt{2}}\right)$;

     ○ a vector $V3$ $\left(\frac{1}{\sqrt{2}} \quad \frac{-1}{\sqrt{2}} \quad \frac{1}{\sqrt{2}} \quad \frac{-1}{\sqrt{2}}\right)$;

     ○ a vector $V4$ $\left(\frac{1}{\sqrt{2}} \quad \frac{-j}{\sqrt{2}} \quad \frac{-1}{\sqrt{2}} \quad \frac{j}{\sqrt{2}}\right)$.

- The plurality of antennas comprises cross-polarized antennas.

- The precoding step is repeated on a period of 5 Time Transmission Interval (TTI).

In addition, there is provided a computer program product (PG), comprising a set of instructions, which when loaded into said computer, causes the computer to carry out the method according to any one of the previous characteristics.

In addition, there is provided a base station (BS) comprising:

- A calculator allowing to implement the method according to any one of the previous characteristics;
- A memory storing the precoding vector switching scheme (PVS),;
- At least one antenna with a plurality of ports.

## BRIEF DESCRIPTION OF THE DRAWINGS

Some embodiments of apparatus and/or methods in accordance with embodiments of the present subject matter are now described, by way of example only, and with reference to the accompanying drawings, in which:

- FIG. 1 is a diagram illustrating the main steps of the method for precoding radio signal.
- FIG. 2 schematically illustrates an embodiment with a precoding scheme for 2 transmitted antennas and one encoded synchronization signal.
- FIG. 3 schematically illustrates a wireless network implementing the method of precoding

## DETAILED DESCRIPTION

In the description that follows, we will design indifferently a precoding vector switching scheme and a precoding matrix. The precoding matrix comprises a set of lines, each lines corresponding to a precoding vector.

In cellular communication systems, synchronization is the first task when user equipment (UE) tries to establish a connection with a base station, as, an evolved Node B (eNB) in terms of the 3GPP LTE. OFDM-based systems such as the LTE are sensitive to frequency and timing offsets/errors caused e.g. by oscillator mismatch at transmitter and receiver, Doppler effects, etc.

To avoid performance loss, frequency and timing offsets must be precisely estimated and adequately compensated. In LTE, the system synchronization is usually accomplished first in downlink.

Concretely, the UE performs an initial time and frequency offset estimation by detecting synchronization signals of eNBs. When this is successful, the UE acquires the frame structure of the downlink signal, and reads basic system information (e.g. cell identity, downlink bandwidth, etc.).

For example, In LTE, a total of 504 cell IDs are defined as $N_{ID}^{cell} = 3 N_{ID}^{(1)} + N_{ID}^{(2)}$ where $N_{ID}^{(1)} = 0, 1, \ldots, 167$ are the cell group ID and $N_{ID}^{(2)} = 0, 1, 2$ the physical layer ID, called also the sector ID, within a cell group.

The information on $N_{ID}^{(2)}$ and $N_{ID}^{(1)}$ are carried through two downlink synchronization channels of an eNB, i.e. the primary synchronization signal, designed by the acronym PSS, and the secondary synchronization signal, designed by the acronym SSS, respectively. The primary synchronization channel signal is embedded on the OFDM symbol 6 and the secondary synchronization signal on the OFDM symbol 5, of the subframe 0 and 5 in each radio frame. Once a UE successfully detects and decodes the PSS and SSS, the cell ID of the eNB can be determined.

The primary synchronization signal allows the user equipment to perform frequency synchronization.

The secondary synchronization signal allows the user equipment to perform time synchronization.

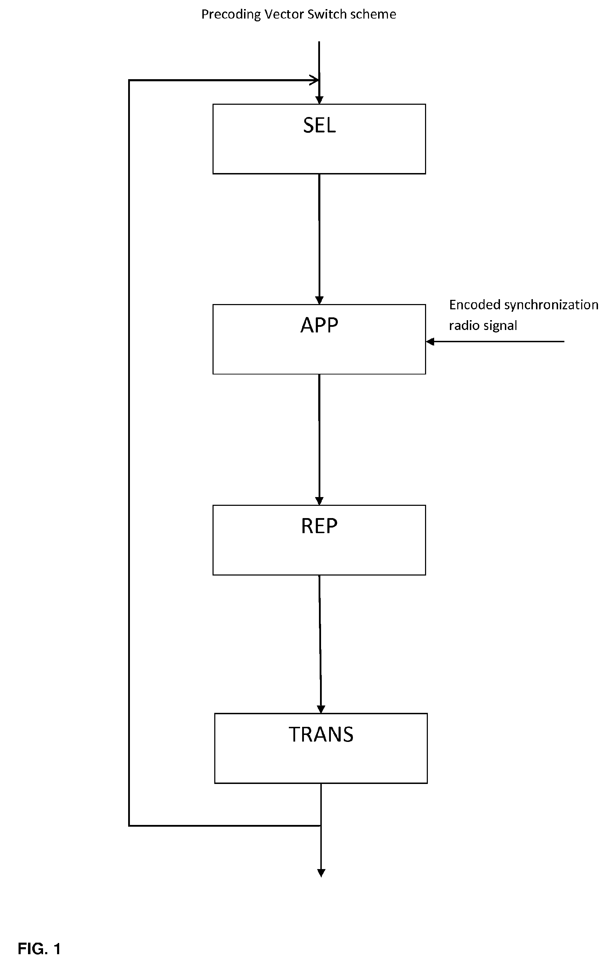

FIG. 1 is a diagram illustrating the main steps of the method for precoding radio signal.

The method comprises a first step SEL in which a precoding vector is selected from a precoding vector switching scheme, defined as the acronym PVS, the said scheme comprising a set of precoding vectors, the dimension of each precoding vector of the said scheme being equal to the number of ports of antenna of the base station.

The precoding vector switching scheme, for example, is:

- Predefined by usage scenarios, as noise, location, network congestion, etc...
- Configured by user or automatically
- Stored in digital memory

In one embodiment of the method, applied to a base station comprising 2 ports of antenna, a set of precoding vectors can be at least the following 4 vectors: a vector $V1 \left( \frac{1}{\sqrt{2}} \quad \frac{1}{\sqrt{2}} \right),$ $V2 \left( \frac{1}{\sqrt{2}} \quad \frac{j}{\sqrt{2}} \right),$ $V3 \left( \frac{1}{\sqrt{2}} \quad -\frac{1}{\sqrt{2}} \right), V4 \left( \frac{1}{\sqrt{2}} \quad -\frac{j}{\sqrt{2}} \right).$

In another embodiment of the method, applied to a base station comprising 4 ports of antenna, a set of precoding vectors can be at least the following 4 vectors: a vector $V1 \left( \frac{1}{\sqrt{2}} \quad \frac{1}{\sqrt{2}} \quad \frac{1}{\sqrt{2}} \quad \frac{1}{\sqrt{2}} \right),$ $V2 \left( \frac{1}{\sqrt{2}} \quad \frac{j}{\sqrt{2}} \quad \frac{-1}{\sqrt{2}} \quad \frac{-j}{\sqrt{2}} \right), V3 \left( \frac{1}{\sqrt{2}} \quad \frac{-1}{\sqrt{2}} \quad \frac{1}{\sqrt{2}} \quad \frac{-1}{\sqrt{2}} \right),$

$$V4 \left( \frac{1}{\sqrt{2}} \quad \frac{-j}{\sqrt{2}} \quad \frac{-1}{\sqrt{2}} \quad \frac{j}{\sqrt{2}} \right).$$

In one example, the antennas are cross-polarized.

In this first step SEL, a calculator selects automatically a precoding vector of the said precoding vector switching scheme.

In one embodiment, each time the SEL step is performed, the current precoding vector is selected in function of a predefined algorithm.

In one embodiment, the selected precoding vector above is stored in digital memory; the function of selection is performed by a processor.

In a second step APP, the method of the subject matter takes in input an encoded radio signal. The radio signal is encoded by a predefined sequence. The predefined sequence comprises a set of symbols called symbols of the sequence.

A calculator applies a pattern to each symbol of an encoded radio signal; the pattern being the first component of the precoding vector selected above.

As an example, with a set of precoding vectors determined for a base station with 2 ports of antenna, as described above, there are at least 4 precoding vectors.

The second vector V2 comprises a first pattern $\frac{1}{\sqrt{2}}$, a

second pattern $\frac{j}{\sqrt{2}}$..

In a third step REP, the method of the subject matter repeats the step of applying a pattern for each pattern of the precoding vector, called above, to generate a precoded signal. Therefore, each component of the precoding, i.e. pattern, vector selected in the step SEL is applied to each symbol of the encoded radio signal to obtain a corresponding precoded radio signal.

In one embodiment, the encoded radio signal is the primary synchronization signal, or the secondary synchronization signal.

In one embodiment, the primary synchronization signal is encoded as a Zadoff-Chu sequences of 62 complex symbols use every 5 TTI, defined as the Transmission Time Interval, in sub-frames 0 and 5 and on OFDM symbol 6. The secondary synchronization signal is an interleaved concatenation of 2 length 31 binary sequences uses every 5 Time Transmission Interval, on OFDM symbol 5 and in sub-frame 0 or 5.

Therefore, each component of the selected precoding vector is applied to each 62 symbols of the Primary synchronization signal sequence or to each 62 symbols of the Secondary synchronization signal sequence.

The operation of applying a pattern comprises the operation of modifying the phase of each symbol of sequences with the said component of a precoding vector. Therefore, the method of the subject matter corresponds to operate a spatial precoding.

In a fourth step TRANS, the precoded radio signals are transmitted simultaneously on each port of antennas.

For example, in one embodiment with 2 ports of antennas, the 2 precoded primary synchronization signals, generated in the step REP with the 2 patterns of a selected vector, are transmitted simultaneously, respectively, on the first port of antenna and the second port of antenna. Likewise for the 2 precoded secondary synchronization signals generated in the step REP.

The method of the subject matter allows repeating the previous steps SEL, APP, REP, TRANS periodically. In each period, the transmission occurs with a different precoded vector selected and a different encoded radio signals.

For example, In LTE, the subframes are 1 ms long, and the Transmission Time Interval is set to 1 ms. Therefore the primary synchronization signal or the secondary synchronization signal are precoded and transmitted with steps SEL, APP, REP, TRANS, which are repeated each 5 Time Transmission Interval.

In one embodiment, the factor √2 in the precoding vectors, defined above, allows to equalize the transmit power of the different precoded synchronization signals generated.

Since the same single antenna port is used for the secondary synchronization signals and for the primary synchronization signals, the precoding vector scheme antenna scheme can be fully UE-transparent. It brings the advantage that the user equipment doesn't need the knowledge of the precoding vector scheme. The methods of the subject matter allow a straightforward configuration, implementation, in the base station.

Simulations show that the method of the subject matter outperforms Cyclic Delay Diversity scheme by more than 2 dB in low correlation case.

The method of the subject matter exhibits for all antenna correlation detection gain compared to one antenna transmit while with Cyclic Delay Diversity scheme, we observe severe loss with cross polarized antenna.

In terms of performances, precoding with the subject matter is the most efficient scheme compared to Cyclic Delay Diversity and one antenna transmission, and is simpler to implement than Cyclic Delay Diversity.

The main steps of the method can be illustrated by the following algorithm:

- idx_vector -> Index of vector in the precoding vector switching scheme, [0...3];
  Index Vector = (counter on subframe 0 or subframe 5) modulo 4;
- idx_port = port of antenna, [0 to nbTxports-1];
- nbTxPorts = 2 or 4;
- idx_symb = index of symbol in the sequence of encoded radio signal, [0 ... 61];
- pss_symbol_vector = Primary synchronization channel symbols vector;
- sss_symbol_vector = Secondary synchronization channel symbols vector;

* PRECODING_SCH is the matrix with the precoding vector scheme (PVS);
* for (idx_port =0; idx_port <nbTxPorts;idx_port ++)

    o for (idx_symb =0; idx_symb < 62; idx_symb ++)

      ➢ precod_pss[idx_port][ idx_symb] = PRECODING_SCH[idx_vector][ idx_port] x pss_symbol_vector [idx_symb]

      ➢ precod_sss[Idx_port][ idx_symb] = PRECODING_SCH[idx_vector][ idx_port] x sss_symbol_vector [idx_symb]

    • precod_pss is the resulting precoded 2x62 or 4x62 matrix corresponding to the precoded primary synchronization signal;
    • precod_sss is the resulting precoded 2x62 or 4x62 matrix corresponding to the precoded secondary synchronization signal.

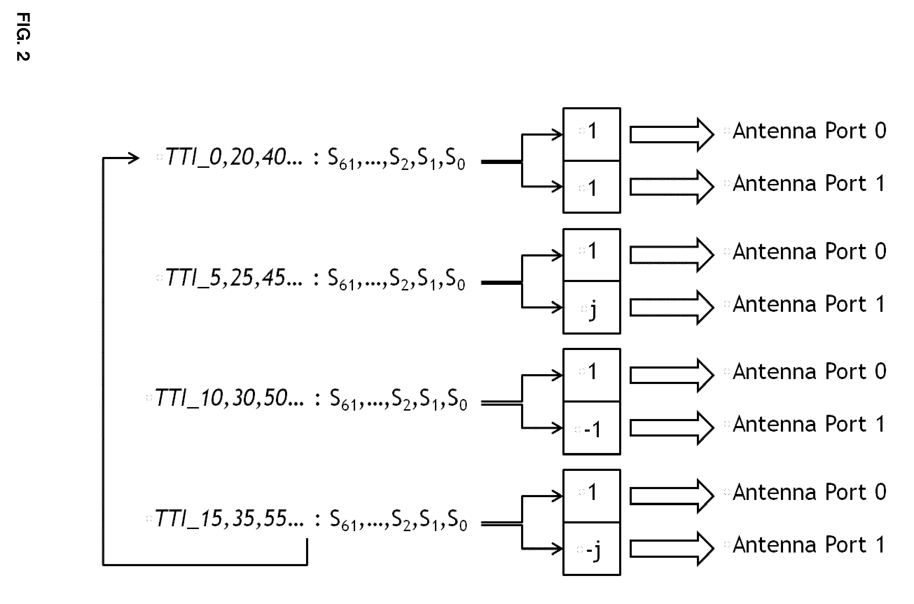

FIG. 2 illustrates an embodiment with a precoding scheme for 2 transmitted antennas and one encoded synchronization signal.

The method of the subject matter allows the repetition of precoding step each 5 TTI with a precoding vector switching scheme.

In the example of FIG.2, the encoded radio synchronization signal is a sequence comprising a set of 62 symbols: S0, S1, S2... to S61.

The precoding vector switching scheme comprises 4 vectors:

    ▪ V1 (1 1),
    ▪ V2 (1 $j$),
    ▪ V3 (1 -1),
    ▪ V4 (1 - $j$).

The set of symbols are in subframe 0 and subframe 5, therefore they are precoded each 5 TTI with a different precoding vector.

For subframe 0 noted as SF0 corresponds vector V1, SF5 corresponds V2, SF10 corresponds V3, SF15 corresponds V4. Then the methods of the subject matter loops to the first vector for the following subframe comprising the set of symbols: For SF20 corresponds V1, SF25 corresponds V2, etc ...

As illustrated, the precoded synchronization signals generated above, by applying the 2 patterns of a selected vector, are simultaneously transmitted on antenna port 0 and port 1.

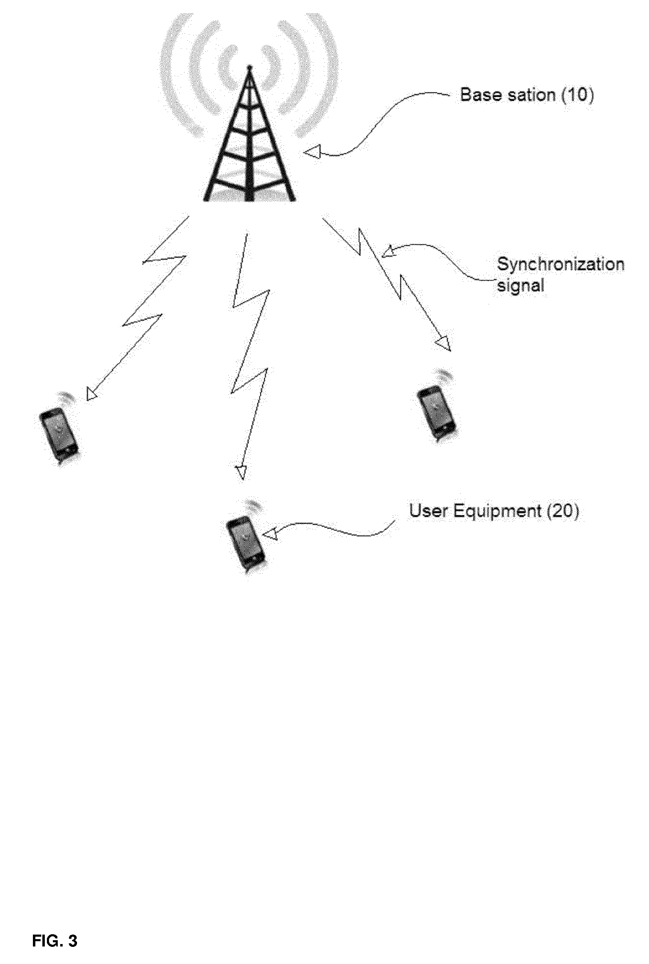

Figure 3 illustrates a wireless telecommunication network comprising:

- A plurality of mobile terminals (UE)
- A base station (BS) including memories and processors to perform the different steps of the subject matter describe above.

A person of skill in the art would readily recognize that steps of above-described methods can be performed by programmed computers. Herein, some embodiments are also intended to cover program products for a computer, comprising a set of instructions, which, when loaded into said computer, causes the computer to carry out above-described method. The program storage devices may be, e.g., digital memories, magnetic storage media such as a magnetic disks and magnetic taps, hard drives, or optically readable digital data storage media. The embodiments are also intended to cover computers programmed to perform said steps of the above-described method. In a not limited embodiment of FIG. 3, the base station (10) comprises a computer program product PG, said computer program product comprising a set of instructions. Thus, said set of instructions contained, for example, in the base station programming memory, may cause the base station to carry out the different steps of the method for transmitting precoded radio signals.

The set of instructions may be loaded into the programming memory by reading a data carrier such as, for example, a disk. A service provider can also make the set of instructions available via a communication network such as, for example, the Internet.

The description and drawings merely illustrate the principles of the subject matter. It will thus be appreciated that those skilled in the art will be able to devise various arrangements that, although not explicitly described or shown herein, embody the principles of the subject matter and are included within its spirit and scope. Furthermore, all examples recited herein are principally intended expressly to be only for pedagogical purposes to aid the reader in understanding the principles of the subject matter and the concepts contributed by the inventor to furthering the art, and are to be construed as being without limitation to such specifically recited examples and conditions. Moreover, all statements herein reciting principles, aspects, and embodiments of the subject matter, as well as specific examples thereof, are intended to encompass equivalents thereof.

**Claims**

1. A method for transmitting at least one encoded radio signal on a plurality of antennas, each encoded radio signal being encoded by a predefined sequence comprising a set of symbol, **characterized in that** it comprises:

    - Defining a precoding vector switching scheme (PVS), the said scheme comprising a set of precoding vectors, the dimension of each precoding vector of the said scheme (PVS) being equal to the number of antennas;
    - A precoding step for each signal comprising:

o Selecting a precoding vector of the said scheme (SEL);
o Applying a pattern (APP) to each symbol of a signal, the pattern being the first component of the precoding vector of the said scheme;
o Repeating applying pattern (REP) for each pattern of the precoding vector above to generate a precoded signal;
o Transmitting simultaneously the precoded signal on each antenna (TRANS);

- Repeating periodically the precoding step by switching of precoding vector of the said scheme (PVS).

**2.** A method according to claim 1, wherein:

- The encoded radio signal is at least one synchronization signals.

**3.** A method according to claim 2, wherein the synchronization signals comprises:

- A signal to provide time synchronization;
- A signal to provide frequency synchronization.

**4.** A method according to claim 3, wherein:

- The frequency synchronization signal is the Primary Synchronization Signal (PSS);
- The time synchronization signal is the Secondary Synchronization Signal (SSS).

**5.** A method according to anyone of the previous claims, wherein:

- The operation of applying a pattern comprises the operation of modifying the phase of each symbol of sequences with the said component of a precoding vector.

**6.** A method according to anyone of the previous claims, wherein:

- The plurality of antennas comprises 2 antennas.

**7.** A method according to anyone of the previous claims, wherein:

- The plurality of antennas comprises 4 antennas;

**8.** A method according to claim 6, wherein the precoding vector scheme (PVS) comprises at least 4 vectors:

- a vector $V1$ $\left(\frac{1}{\sqrt{2}} \quad \frac{1}{\sqrt{2}}\right)$;
- a vector $V2$ $\left(\frac{1}{\sqrt{2}} \quad \frac{j}{\sqrt{2}}\right)$;
- a vector $V3$ $\left(\frac{1}{\sqrt{2}} \quad -\frac{1}{\sqrt{2}}\right)$;
- a vector $V4$ $\left(\frac{1}{\sqrt{2}} \quad -\frac{j}{\sqrt{2}}\right)$.

**9.** A method according to claim 7, wherein the precoding vector scheme (PVS) comprises at least 4 vectors:

- a vector $V1$ $\left(\frac{1}{\sqrt{2}} \quad \frac{1}{\sqrt{2}} \quad \frac{1}{\sqrt{2}} \quad \frac{1}{\sqrt{2}}\right)$;
- a vector $V2$ $\left(\frac{1}{\sqrt{2}} \quad \frac{j}{\sqrt{2}} \quad \frac{-1}{\sqrt{2}} \quad \frac{-j}{\sqrt{2}}\right)$;
- a vector $V3$ $\left(\frac{1}{\sqrt{2}} \quad \frac{-1}{\sqrt{2}} \quad \frac{1}{\sqrt{2}} \quad \frac{-1}{\sqrt{2}}\right)$;
- a vector $V4$ $\left(\frac{1}{\sqrt{2}} \quad \frac{-j}{\sqrt{2}} \quad \frac{-1}{\sqrt{2}} \quad \frac{j}{\sqrt{2}}\right)$.

**10.** A method according to anyone of the previous claims, wherein:

- The plurality of antennas comprises cross-polarized antennas.

**11.** A method according to anyone of the previous claims, wherein:

- The precoding step is repeated on a period of 5 Time Transmission Interval (TTI).

**12.** A computer program product (PG), comprising a set of instructions, which when loaded into said computer, causes the computer to carry out the method according to any one of the previous claims.

**13.** A base station (BS) comprising:

- A calculator allowing to implement the method according to any one of the previous claims;
- A memory storing the precoding vector switching scheme (PVS);
- At least one antenna with a plurality of ports.

Precoding Vector Switch scheme

FIG. 1

FIG. 2

Base sation (10)

Synchronization
signal

User Equipment (20)

**FIG. 3**

Europäisches
Patentamt

European
Patent Office

Office européen
des brevets

# EUROPEAN SEARCH REPORT

Application Number

EP 15 15 2524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ETRI: "Evaluation of transmit diversity schemes for SCH", 3GPP DRAFT; R1-063517, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Riga, Latvia; 20061102, 2 November 2006 (2006-11-02), XP050103949, [retrieved on 2006-11-02] | 1-8, 10-13 | INV. H04B7/04 H04B7/06 H04B7/10 H04J11/00 H04L27/26 |
| Y | * figures 2(a),3; table 1 * * Initial cell search; paragraph [0002] * * paragraph [0004] - paragraph [0005] * ----- | 9 | |
| Y | US 2013/156125 A1 (KO HYUNSOO [KR] ET AL) 20 June 2013 (2013-06-20) * paragraph [0115] * ----- | 9 | |
| Y | EP 2 541 796 A2 (LG ELECTRONICS INC [KR]) 2 January 2013 (2013-01-02) * paragraphs [0113] - [0114] * ----- | 9 | |
| X | US 2014/254715 A1 (BAREEV DENIS [RU] ET AL) 11 September 2014 (2014-09-11) * paragraphs [0021], [0025] - [0026], [0031], [0035] - [0040]; figures 1,3,5-6 * ----- | 1-7, 10-13 | |

TECHNICAL FIELDS SEARCHED (IPC)

H04B
H04J
H04L

The present search report has been drawn up for all claims

| Place of search | Date of completion of the search | Examiner |
|---|---|---|
| Munich | 24 July 2015 | Fouasnon, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 15 2524

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2015

| Patent document cited in search report | | | Publication date | Patent family member(s) | | | Publication date |
|---|---|---|---|---|---|---|---|
| US 2013156125 | A1 | | 20-06-2013 | EP | 2590338 | A2 | 08-05-2013 |
| | | | | KR | 20130041906 | A | 25-04-2013 |
| | | | | US | 2013156125 | A1 | 20-06-2013 |
| | | | | WO | 2012002767 | A2 | 05-01-2012 |
| | | | | | | | |
| EP 2541796 | A2 | | 02-01-2013 | CN | 102859896 | A | 02-01-2013 |
| | | | | EP | 2541796 | A2 | 02-01-2013 |
| | | | | EP | 2541797 | A2 | 02-01-2013 |
| | | | | JP | 2013520913 | A | 06-06-2013 |
| | | | | US | 2012314678 | A1 | 13-12-2012 |
| | | | | US | 2013208705 | A1 | 15-08-2013 |
| | | | | WO | 2011105810 | A2 | 01-09-2011 |
| | | | | WO | 2011105813 | A2 | 01-09-2011 |
| | | | | | | | |
| US 2014254715 | A1 | | 11-09-2014 | US | 2014254715 | A1 | 11-09-2014 |
| | | | | WO | 2014135506 | A1 | 12-09-2014 |

EPO FORM P0459

For more details about this annex : see Official Journal of the European Patent Office, No. 12/82